# EUROPÄISCHE PATENTANMELDUNG

(11) **EP 1 912 036 A2**
(43) Veröffentlichungstag der Anmeldung: **16.04.2008**
(21) Anmeldenummer: 07018188.8
(22) Anmeldetag: 17.09.2007
(51) Int. Cl.: F28F 9/18, F28F 13/06, F28F 27/02

(54) **Wärmeübertrager mit Flachrohren und Verfahren zur Herstellung eines solchen Wärmeübertragers**

(30) Priorität: 11.10.2006 DE 102006048484
(71) Anmelder: Behr GmbH & Co. KG, 70469 Stuttgart (DE)
(72) Erfinder: Hemminger, Roland, 73733 Esslingen (DE); Hendrix, Daniel, 70374 Stuttgart (DE); Moderau, Klaus, 70499 Stuttgart (DE); Pomin, Hubert (Dr.-Ing.), 71069 Sindelfingen (DE); Schienemann, Mark, 70469 Stuttgart (DE)

(57) **Zusammenfassung**

Die Erfindung betrifft einen Wärmeübertrager mit Flachrohren (1) und einer Bodenplatte (2), welche Öffnungen mit Kragen (3) aufweist, wobei die Bodenplatte (2) Teil eines Sammelkastens ist und die Kragen (3) aus der Bodenplatte (2) in eine dem Sammelkasten abgewandte Richtung (2b) ausgeformt sind und die Flachrohre (1) Rohrenden (4) aufweisen, welche in den Kragen (3) aufgenommen sind.

Es wird vorgeschlagen, dass die Rohrenden (4) gegenüber der Bodenplatte (2, 2a) einen Rohrüberstand (ü) aufweisen und dass der Rohrüberstand (ü) im Bereich der Längsseiten der Rohrenden (4) strömungsgünstig umgeformt ist.

## Beschreibung

Die Erfindung betrifft einen Wärmeübertrager mit Flachrohren und einer Bodenplatte nach dem Oberbegriff des Patentanspruches 1 - bekannt durch die DE 197 57 034 A1 der AnmeJderin - sowie ein Verfahren zur Herstellung eines Wärmeübertragers nach dem Oberbegriff des Patentanspruches 8.

Flachrohr-Wärmeübertrager werden u. a. als Ladeluftkühler für Kraftfahrzeuge eingesetzt, wobei die Flachrohre einen etwa rechteckförmigen Querschnitt mit Längsseiten und Schmalseiten aufweisen und von komprimierter und aufgeheizter Luft durchströmt werden. Auf der Außenseite der Flachrohre befinden sich Rippen, welche mit den Rohren einen Block bilden und von Kühlluft überströmt werden. Die Flachrohre sind mit metallischen Rohrböden, die Teil von Sammelkästen sind, in der Regel stofflich verbunden, insbesondere verlötet. Hierzu weisen die Rohrböden so genannte Durchzüge auf, welche die Rohrenden in sich aufnehmen und damit eine Kontaktfläche für die Verlötung bilden. Aus Fertigungsgründen sind die Durchzüge häufig zur Innenseite des Sammelkastens hin ausgeformt, sodass sich auf der Außenseite des Rohrbodens eine Einführschräge ergibt. Dies erleichtert das Einstecken der Rohrenden in die Rohrböden bzw. das Aufstecken der Rohrböden auf die Flachrohrenden. Die in den Sammelkasten hineinragenden Durchzüge bilden einen Strömungswiderstand, welcher insbesondere bei Ladeluftkühlern nachteilig ist. Insbesondere bei der Einströmung der Ladeluft aus dem Sammelkasten in die Flachrohre ergeben sich Verwirbelungen durch die Umlenkung der Strömung und demzufolge ein erhöhter Druckabfall auf der Ladeluftseite für den Ladeluftkühler. Man hat daher bereits Umlenkorgane in Form von strömungsbeeinflussenden Bauteilen und Einsätzen vorgeschlagen, z. B. in der DE 103 54 382 A1 der Anmelderin. Nachteilig hierbei ist, dass ein zusätzliches Bauteil hergestellt und montiert werden muss.

Durch die DE 198 57 435 A1 wurde ein insbesondere als Ladeluftkühler einsetzbarer Wärmeübertrager bekannt, bei welchem Durchzüge eines Rohrbodens ebenfalls zur Innenseite eines Sammelkastens hin ausgeformt sind und Rohrenden in sich aufnehmen, welche über die Durchzüge nach innen hinausstehen und endseitig auf ihren Längsseiten trichterförmig erweitert sind. Hierbei entsteht ebenfalls ein erhöhter Strömungswiderstand, welcher durch Aufsetzen einer Umlenkplatte reduziert werden soll. Auch hier ist von Nachteil, dass die Umlenkplatte als zusätzliches Teil hergestellt und in den Wärmeübertrager eingebaut werden muss.

Durch die DE 100 57 190 A1 wurde ein als Ladeluftkühler für Kraftfahrzeuge verwendbarer Wärmeübertrager bekannt, welcher einen metallischen Rohrboden und einen Kunsfistoifsammelkasten aufweist, welche über eine Gummidichtung miteinander verbunden sind. Der Rohrboden weist nach innen gerichtete Durchzüge auf, in welche Rohre eingesteckt sind, deren Rohrenden gegenüber dem Boden bzw. den Durchzügen einen Rohrüberstand aufweisen. Zur Reduzierung des Strömungswiderstandes der in die Rohre einströmenden Ladeluft sind zwischen den Längsseiten der Rohrenden im Querschnitt eiförmig - ovale Stege eingelegt, welche mit der Dichtung zu einer Umlenkplatte verbunden sind. Die aus Gummi oder Kunststoff gespritzte Umlenkplatte stellt ein zusätzlich herzustellendes Teil dar, welches mit zusätzlichen Kosten belastet ist.

Abweichend von dem zuvor erläuterten Stand der Technik, ist es bei Ladeluftkohlem auch bekannt, die Durchzüge zur Aufnahme der Rohrenden in die entgegengesetzte Richtung auszuformen, d. h. in Richtung des Wärmeübertragerblockes. Vorteilhaft hierbei ist, dass sich die Strömungsverhältnisse beim Einlauf der Ladeluft in die Rohrenden verbessern, andererseits gestaltet sich das Einschieben der Rohre in die Durchzüge schwieriger, da letztere herstellungsbedingt zunächst keine Einführschräge aufweisen. Durch die DE 197 57 034 A1 der Anmelderin wurde ein derartiger Ladeluftkühler für Kraftfahrzeuge bekannt, bei welchem an den nach außen (zur Blockseite hin) gerichteten Durchzügen eine Fase als Einführhilfe für die Rohrenden angebracht ist. Zur Reduzierung des Druckverlustes des Ladeluftkühlers sind die Durchzüge zum Sammelkasten (Luftkasten) hin trichter oder glockenförmig erweitert. Dabei weisen die Rohrenden gegenüber der Bodenebene keinen Rohrüberstand auf. Bei einem weiteren Ausführungsbeispiel sind die Durchzüge nach innen, d. h. in Einschubrichtung der Rohrenden ausgeformt, und die Rohrenden ragen über die Durchzüge hinaus. Um auch bei dieser Ausführung die Einlaufverluste für die Ladeluft gering zu halten, sind die Rohrenden trichterartig oder glockenförmig aufgeweitet, bis sie sich zumindest an einander zugewandten Bereichen berühren. Damit ist der Zwischenraum zwischen benachbarten Rohrenden strömungsgünstig überbrückt. Allerdings geht bei dieser Lösung Bauhöhe verloren, der Materialverbrauch für die Rohre ist höher, demzufolge steigt das Gewicht des Wärmeübertragers. Eine ähnliche Lösung wurde durch die DE 199 62 861 A1 der Anmelderin bekannt, wobei der Rohrboden nach außen ausgeformte Durchzüge zur Aufnahme von Rohrenden aufweist, welche auf der Innenseite des Bodens bündig mit dem Rohrboden abschließen. Auf der Innenseite des Rohrbodens ist eine Strömungsleitplatte mit trichterförmigen Luftleitelementen angeordnet, welche die Einlaufverluste der Ladeluft reduzieren. Nachteilig ist auch hier die zusätzliche Strömungsleitplatte infolge Kosten und Gewicht.

Schließlich wurde die DE 198 44 848 A1 ein als Ladeluftkühler ausgebildeter Wärmeübertrager mit einem Rohrboden bekannt, welcher nach außen (zum Block hin) ausgeformte Durchzüge aufweist, welche sowohl auf ihrer Innenals auch auf ihrer Außenseite mit einer aus Rundung bzw. Fase versehen sind. Die Rohrenden von Flachrohren sind über Kontaktflächen in den Durchzügen aufgenommen, wobei die Oberkante der Rohrenden unterhalb der im Sammelkasten angeordneten Ebene des Rohrbodens liegt. Durch diese Geometrie des Durchzuges werden Lötspalte gebildet, welche die Lötung verbessern sollen.

Ausgehend von dem vorgenannten Stand der Technik, insbesondere der DE 197 57 034 A1 der Anmelderin ist es Aufgabe der vorliegenden Erfindung, einen Wärmeübertrager der eingangs genannten Art hinsichtlich seiner Verbindung zwischen Rohrenden und Bodenplatte derart zu verbessern, dass einerseits eine feste und dichte Lötverbindung und andererseits günstige Strömungsverhältnisse, insbesondere ein niedriger Druckabfall für den gesamten Wärmeübertrager erreicht werden. Darüber hinaus ist es Aufgabe der Erfindung, ein kostengünstiges Verfahren zur Herstellung eines derartigen Wärmeübertragers bereitzustellen.

Die Aufgabe der Erfindung wird zunächst durch die Merkmale des Patentanspruches gelöst. Erfindungsgemäß ragen die Rohrenden nach innen über die Ebene der Bodenplatte hinaus und bilden gegenüber dieser einen (geringen) Rohrüberstand. Die Flachrohrenden sind im Bereich ihrer Längsseiten derart umgeformt, dass der aus dem Rohrüberstand resultierende Strömungswiderstand weitestgehend beseitigt wird. Dies geschieht erfindungsgemäß durch ein Umlegen Umbiegen oder Umrollen der Längsseiten der Rohrenden. Vorzugsweise werden die Längsseiten an ihren äußersten Bereichen eingeschnitten, sodass sich zwischen den Einschnitten ein Abschnitt bzw. Lappen ergibt, welcher nach außen umgelegt oder umgebördelt werden kann. Der Rohrüberstand im Bereich der Schmalseiten und der Übergänge in den Längsseiten bleibt somit stehen. Die Erfindung geht dabei von der Kenntnis aus, dass die bevorzugte Strömungsrichtung im Sammelkasten des Wärmeübertragers quer zu den Längsseiten der Flachrohrenden erfolgt, d. h. in dieser Richtung treten Umlenk- und demzufolge die größten Strömungsverluste auf.

In einem anderen Ausführungsbeispiel weist der Boden lediglich zumindest eine Öffnung, insbesondere eine Mehrzahl von Öffnungen auf, die zur Aufnahme zumindest eines Rohres dienen. Der Boden weist bei diesem Ausführungsbeispiel keine Durchzüge auf.

Durch das erfindungsgemäße Umformen der Längsseiten werden diese Strömungsverluste reduziert und weitestgehend vermieden. Somit ergibt sich als Vorteil ein geringerer Druckverlust auf der Primärseite des Wärmeübertragers, d. h. für das die Rohre durchströmende Medium. Darüber hinaus wird als Vorteil eine verbesserte Lötverbindung zwischen Rohrenden und Rohrboden bzw. dessen Durchzügen erreicht, da die umgelegten Abschnitte der Längsseiten als zusätzliche Lötfläche gewonnen werden. Das erhöht auch die Stabilität der Rohr/Boden-Verbindung. Schließlich ergibt sich als Vorteil infolge des relativ glatten Bodens eine geringere Bauhöhe für den Sammelkasten des Wärmeübertragers.

Die Erfindung ist besonders vorteilhaft für Ladeluftkühler anwendbar, da hier die Einlaufverluste der Ladeluft im Bereich der Rohrenden wirksam reduziert werden können, ohne dass hierfür zusätzliche Teile wie Umlenkplatten oder Strömungsleitelemente verwendet werden müssen.

Die Aufgabe der Erfindung wird auch durch ein Verfahren mit den Merkmalen des Patentanspruches 8 gelöst. Dabei wird zunächst ein Wärmeübertragerblock, bestehend aus Flachrohren und Rippen, vorzugsweise Wellrippen gefügt ("kassettiert"). Anschließend werden auf die Rohrenden die Bodenplatten aufgesetzt, und zwar so weit, dass sich auf der Bodeninnenseite, d. h. im Bereich des Sammelkastens ein geringer Rohrüberstand ergibt. Danach werden die Längsseiten an ihren äußeren Enden eingeschnitten, und der zwischen den Einschnitten entstandene Abschnitt wird nach außen in Richtung auf den Boden umgeformt, sodass sich eine strömungsgünstige Einlaufkontur ergibt Abschließend kann der Rippen/Rohr-Block mit den Böden gelötet werden.

Durch das erfindungsgemäße Verfahren wird der Vorteil einer kostengünstigen und einfachen Herstellung des Wärmeübertragers, insbesondere eines Ladeluftkühlers für Kraftfahrzeuge erreicht. Die Montage von zusätzlichen strömungsleitenden Elementen, welche in die Flachrohrenden eingesetzt oder auf den Boden aufgelegt werden, entfällt.

Ein Ausführungsbeispiel der Erfindung ist in der Zeichnung dargestellt und wird im Folgenden näher beschrieben. Es zeigen
- Fig. 1: eine perspektivische Darstellung einer Verbindung zwischen Flachrohr und Bodenplatte und
- Fig. 2: einen Schnitt durch die Verbindung zwischen Rohrende und Bodenplatte.

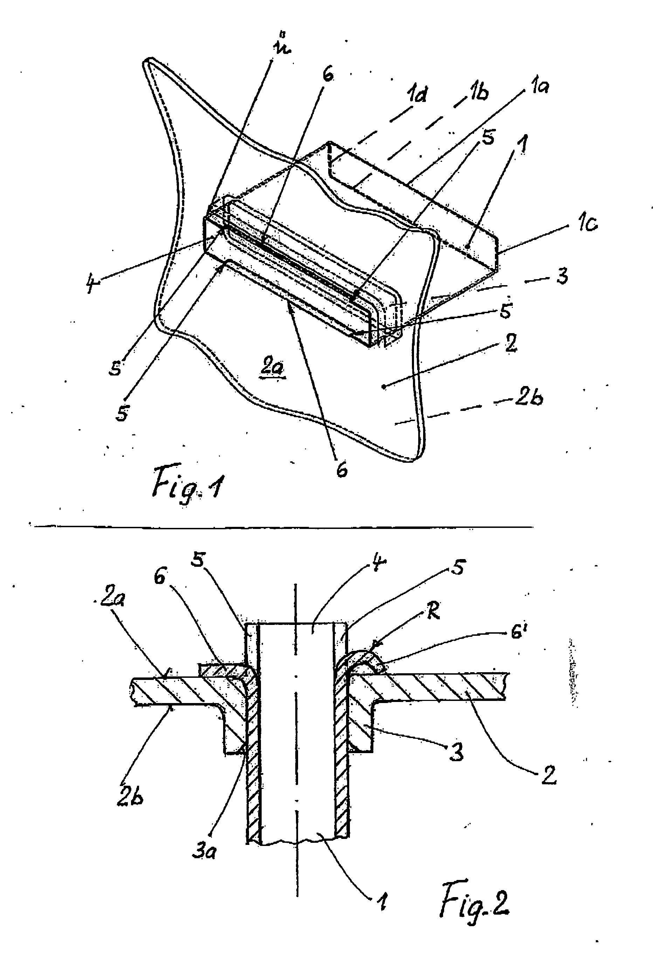

**Fig. 1** zeigt einen Ausschnitt eines nicht dargestellten Wärmeübertragers im Bereich einer Verbindung zwischen einem Flachrohr 1 und einer Bodenplatte 2, auch Rohrboden genannt. Das Flachrohr 1 weist einen etwa rechteckförmigen Querschnitt mit zwei Längsseiten 1 a, 1 b sowie zwei Schmalseiten 1c, 1d auf. Derartige Flachrohre sind insbesondere bei Ladeluftkühlern für Kraftfahrzeuge üblich. Sie können - was nicht dargestellt ist - im Rohrinneren mit einer so genannten Turbulenzeinlage versehen sein. Der Rohrboden 2 ist im Wesentlichen als ebene Platte ausgebildet, welche eine dem Inneren eines nicht dargestellten Sammelkastens zugewandte Fläche 2a und eine dem Inneren abgewandte Fläche 2b aufweist. Bezüglich des weiteren Aufbaus des nicht dargestellten Wärmeübertragers wird auf den eingangs genannten, insbesondere den gattungsgemäßen Stand der Technik verwiesen. Die Bodenplatte 2 weist einen Durchzug 3 auf, welcher zur Außenseite 2b aus der Bodenplatte 2 ausgeformt ist. Das Flachrohr 1 weist ein Rohrende 4 auf, welches von dem Durchzug 3 aufgenommen wird und die innere Bodenseite 2a etwas nach innen überragt, d. h. das Rohrende 4 bildet mit der Bodenebene 2a einen Rohrüberstand ü. Das Rohrende 4 weist analog zum Flachrohr 1 ebenfalls zwei Längs- und zwei Schmalseiten auf, die hier nicht mit Bezugszahlen versehen sind. Im Bereich der beiden Schmalseiten des Rohrendes 4 sind jeweils zwei Einschnitte 5 angebracht, zwischen denen verformbare Abschnitte 6 angeordnet sind. Die Einschnitte 5 weisen eine Tiefe auf, welche ungefähr der Höhe des Rohrüberstandes ü entspricht, d. h. sie reichen etwa bis zur Bodenebene 2a. Die Einschnitte 5 werden vorzugsweise nach dem Einstecken der Rohrenden 4 in die Durchzüge 3 vorgenommen. Die Abschnitte 6 zwischen den Einschnitten 5 bilden Lappen, welche nach außen, d. h. von den Rohrinnenseiten in Richtung Bodenebene 2a umgebogen oder umgeklappt werden. Damit wird die Höhe des Rohrüberstandes im Bereich der Längsseiten verkleinert und demzufolge der Strömungswiderstand reduziert. Wie aus der Zeichnung ersichtlich, bleiben die Schmalseiten mit ihren Übergängen zu den Längsseiten des Rohrendes stehen. Die Strömung der Ladeluft im Inneren des nicht dargestellten Sammelkastens erfolgt im Wesentlichen quer zu den Längsseiten 1a, 1b der Flachrohre bzw. der Rohrenden 4, sodass durch die erfindungsgemäß umgeklappten Abschnitte 6 die Umlenk- und Einlaufverluste der Ladeluft reduziert werden.

**Fig. 2** zeigt - in vergrößerter Darstellung - einen Schnitt durch die Verbindung des Rohrendes 4 mit dem Durchzug 3 der Bodenplatte 2. Der Schnitt zeigt unterschiedliche Ausführungsformen für die linke und die rechte Hälfte des Flachrohres 1, d. h. rechts und links von der Mittelinie m. Bei der Ausführungsform auf der linken Seite ist der Abschnitt 6 der Längsseite etwa rechtwinklig nach außen gebogen, sodass er auf der Ebene 2a der Bodenplatte 2 weitestgehend aufliegt. Bei der Ausführungsform auf der rechten Seite weist der nach außen umgebogene Abschnitt 6' einen Radius R auf, wodurch ebenfalls eine strömungsgünstige Einlaufkontur für das Rohrende 4 erzielt wird. Der Durchzug 3 weist auf seiner dem Boden 2 abgewandten Seite eine Fase 3a auf, welche das Einführen der Rohrenden 4 erleichtert. Das Rohrende 4 ist mit dem Durchzug 3 im Bereich der gemeinsamen Kontaktflächen verlötet. Boden 2 und Rohr 1 bestehen vorzugsweise aus Aluminium oder Aluminiumlegierungen, wobei das Lot vorzugsweise als Plattierung deponiert ist.

Die Herstellung des Wärmeübertragers erfolgt bevorzugt gemäß folgenden Verfahrensschritten:

Zunächst wird ein nicht dargestellter Block von Flachrohren und Wellrippen gefügt, so genanntes Kassettieren. Anschließend werden auf die überstehenden Rohrenden des Blockes die Rohrböden aufgesteckt, wobei die Durchzüge in Richtung Block weisen, d. h. die noch nicht umgeformten Rohrenden treffen zunächst auf die Fase 3a der Durchzüge 3. Die Rohrböden 2 werden soweit über die Rohrenden 4 geschoben, dass sich der Rohrüberstand ü ergibt. Dann werden die Einschnitte 5 in die Längsseiten der Rohrenden 4 eingebracht, was mittels eines scharfkantigen Stempels erfolgen kann. Nach dem Einschneiden oder gleichzeitig mit dem Einschneiden werden die Abschnitte zwischen den Schnittkanten nach außen umgelegt, umgebogen oder umgerollt, sodass sich die strömungsgünstige Kontur ergibt.

Die erfindungsgemäße Rohr/Boden-Verbindung wird vorzugsweise bei Ladeluftkühlern für Kraftfahrzeuge angewandt. Da sich hier die Verbesserung der Strömungsverhältnisse, verbunden mit einer Reduzierung des Druckabfalls auf der Ladeluftseite, besonders günstig auf die Leistungssteigerung des Verbrennungsmotors des Kraftfahrzeuges auswirkt. Die Anwendung auf andere Wärmeübertrager, beispielsweise Abgaswärmeübertrager oder Kühlmittelkühler liegt im Bereich der Erfindung.

## Patentansprüche

1. Wärmeübertrager mit Flachrohren (1) und einer Bodenplatte (2), welche Öffnungen mit Kragen (3) aufweist, wobei die Bodenplatte (2) Teil eines Sammelkastens ist und die Kragen (3) aus der Bodenplatte (2) in eine dem Sammelkasten abgewandte Richtung (2b) ausgeformt sind und die Flachrohre (1) Rohrenden (4) aufweisen, welche in den Kragen (3) aufgenommen sind, **dadurch gekennzeichnet, dass** die Rohrenden (4) gegenüber der Bodenplatte (2, 2a) einen Rohrüberstand (ü) aufweisen und dass der Rohrüberstand (ü) im Bereich der Längsseiten der Rohrenden (4) strömungsgünstig umgeformt ist.

2. Wärmeübertrager mit Flachrohren (1) und einer Bodenplatte (2), welche Öffnungen aufweist, wobei die Bodenplatte (2) Teil eines Sammelkastens ist und die Flachrohre (1) Rohrenden (4) aufweisen, welche in den Öffnungen aufgenommen sind, **dadurch gekennzeichnet, dass** die Rohrenden (4) gegenüber der Bodenplatte (2, 2a) einen Rohrüberstand (ü) aufweisen und dass der Rohrüberstand (ü) im Bereich der Längsseiten der Rohrenden (4) strömungsgünstig umgeformt ist.

3. Wärmeübertrager nach Anspruch 1 oder 2, **dadurch gekennzeichnet, dass** die Längsseiten Abschnitte (6) aufweisen, die in Richtung der Bodenplatte (2a) umgebogen sind.

4. Wärmeübertrager nach Anspruch 3, **dadurch gekennzeichnet, dass** die Abschnitte (6) durch Einschnitte (5) begrenzt sind.

5. Wärmeübertrager nach Anspruch 4, **dadurch gekennzeichnet, dass** die Einschnitte (5) eine Tiefe aufweisen, die dem Rohrüberstand (ü) entspricht.

6. Wärmeübertrager nach einem der Ansprüche 3 bis 5, **dadurch gekennzeichnet, dass** die umgeformten Abschnitte (6) auf der Bodenplatte (2, 2a) aufliegen.

7. Wärmeübertrager nach einem der Ansprüche 1, 3 bis 6, **dadurch gekennzeichnet, dass** die Rohrenden (4) mit den Kragen (3) und der Bodenplatte (2) verlötbar sind.

8. Wärmeübertrager nach einem der vorhergehenden Ansprüche, **dadurch gekennzeichnet, dass** der Wärmeübertrager ein Ladeluftkühler, insbesondere ein luftgekühfter Ladeluftkühler für Kraftfahrzeuge, ist.

9. Verfahren zur Herstellung eines Wärmeübertragers nach einem der vorhergehenden Ansprüche, **gekennzeichnet durch** folgende Verfahrensschritte:
- Fügen (Kassettieren) eines Wärmeübertragerblockes, bestehend aus Flachrohren (1) und Rippen,
- Aufstecken der Bodenplatte (2) auf die Rohrenden (4) der Flachrohre (1), sodass die Rohrenden (4) einen Rohrüberstand (ü) bilden,
- Einschneiden der Längsseiten der Rohrenden (4) und
- Umformen der Längsseiten (6) zwischen den Einschnitten (5).
